Europäisches Patentamt

European Patent Office

Office européen des brevets

(11) Publication number: **0 343 837**

**A1**

## EUROPEAN PATENT APPLICATION

(21) Application number: 89304965.0

(51) Int. Cl.⁴: **B65G 13/12 , B65G 13/00**

(22) Date of filing: **17.05.89**

(30) Priority: **21.05.88 GB 8812052**

(43) Date of publication of application:
**29.11.89 Bulletin 89/48**

(84) Designated Contracting States:
**DE ES FR GB NL**

(71) Applicant: **LINK 51 LIMITED**
**Link House Halesfield 6**
**Telford Shropshire TF7 4LN(GB)**

(72) Inventor: **Polyner, Donald Emanuel**
**Silver Graya Mill Lane**
**Codsall Wolverhampton WV8 1QA(GB)**

(74) Representative: **Lally, William et al**
**FORRESTER & BOEHMERT**
**Widenmayerstrasse 4/I**
**D-8000 München 22(DE)**

(54) Conveyor assembly.

(57) A conveyor assembly for enabling articles to be moved a short distance from a loading station (X) to a collection station (Y), the articles moving down the conveyor assembly under the action of gravity. The assembly comprises a supporting structure, comprising vertically extending struts (6) by beams (8). A roller assembly (13) comprises spaced side members (14), spaced end member (16), providing a generally rectangular frame, and a plurality of intermediate longitudinal members (18) each of which supports a plurality of rollers (20).

The conveyor assembly comprises pivot mounting means (39) for pivotally supporting the roller assembly at one end, and, at the forward end of the roller assembly, retaining means to retain the roller assembly at a desired inclination to the horizontal.

FIG.

## Conveyor Assembly

This invention is concerned with conveyor assemblies, particuly of the kind (hereinafter referred to as being of the kind specified) as are used to enable articles to be stored on a first-in, first-out system (e.g.) a work-feeding station, from which (e.g.) boxes may be unloaded to supply an assembly operation. Such a conveyor assembly is conventionally known as a free flow conveyor storage assembly.

A conventional conveyor assembly of the kind specified comprises a roller assembly, generally in the form of a flat bed, comprising a plurality of rows of rollers, each row comprising a plurality of rollers mounted for rotation about a common axis, the bed being inclined to permit the articles to move freely under gravity from the loading station to the collection station.

Difficulty is encountered in that the speed with which articles move over the inclined bed depends on (inter alia) the weight and/or composition of the articles.

Additionally it is also desirable that the system be readily assembled so that a conveyor bed can be quickly adjusted for lateral pitch, and that the gradient of the bed can quickly be adjusted.

According to this invention there is provided a conveyor assembly of the kind specified comprising:

(a) a supporting structure;

(b) a roller assembly;

(c) pivotal mounting means by which the roller assembly may be mounted on the supporting structure for pivotal movement about an axis at right angles to the direction of flow over the roller assembly; and

(d) retaining means cooperative between the roller assembly and the supporting structure to retain the roller assembly in a desired inclination to the horizontal.

In this manner the roller assembly may be preassembled and mounted in a convenient manner on the supporting structure.

Thus the roller assembly may comprise a frame comprising end members and a plurality of longitudinal members extending between the end members, individual rollers of the assembly being carried by the longitudinal members.

The longitudinal members may comprise outer side members fixedly secured to and extending between the end members, with intermediate longitudinal members being received at one, rear end in a channel in one of the end members (hereinafter referred to as the rear end member) and being clamped at the other, forward end by the other end member (hereinafter referred to as the forward end member). Alternatively however and preferably, the intermediate longitudinal members may be clamped at both the rear end member and the forward end member by identical clamping devices.

In this manner the roller assembly may be preassembled in a convenient manner, and the positions of the rollers adjusted widthwise of the roller assembly, thus providing a means by which the number and spacing of individual rows of rollers can quickly and simply be adjusted.

Preferably the construction and arrangement is such that limited linear movement of the roller assembly, generally in the plane thereof, is permitted, preferably in a manner in which the weight of the roller assembly retains the pivotal mounting means in engagement. Thus the roller assembly may comprise an elongate slot on each side, conveniently on the outer side members, which rest on pivot pins carried by the supporting structure. Preferably the retaining means comprises support members mounted on the supporting structure, conveniently on each side of the roller assembly, with which support members the roller assembly may be engaged.

Preferably the support members are such as to provide support for the roller assembly at a plurality of height-wise positions, whereby a desired inclination of the roller assembly may be selected, in accordance with the articles to be conveyed by the system.

Preferably the construction and arrangement is such that the roller assembly may be disengaged from the support members by linear movement thereof generally in the plane of the roller assembly.

Advantageously the supporting structure is of the kind comprising vertical members provided at spaced vertical intervals with first cooperating means, and the pivot means and/or the retaining means is provided with second cooperating means engagable with the first cooperating means to enable the retaining means and the pivot means (as the case may be) to be readily positionably secured to the supporting structure at desired height-wise position. Thus the first cooperating means may be provided by a series of apertures in each four vertical members of the supporting structure, and the second cooperating means may be provided by tongues in the various components of the retaining means and the pivot means, engagable within the apertures at selected height-wise positions.

There will now be given a detailed description, to be read with reference to the accompanying drawings, of a conveyor assembly which is a preferred embodiment of this invention, having been selected for the purposes of illustrating the invention by way of example.

In the accompanying drawings:

FIGURE 1 is a perspective view of the preferred embodiment;

FIGURE 2 is an exploded perspective view, on an enlarged scale, of the area A of Figure 1, showing pivot mounting means of the preferred embodiment;

FIGURE 3 is an exploded perspective view, also of an enlarged scale, of the part B of Figure 1, showing retaining means of the preferred embodiment;

FIGURE 3a is a view corresponding to Figure 3 from the other side;

FIGURE 4 is a sectional view showing clamping means of the preferred embodiment;

FIGURE 5 is a fragmentary view, taken in the direction of the arrow A of Figure 4;

FIGURE 6 is a side elevation, taken in the direction of the arrow B of Figure 4;

FIGURE 7 is a perspective view illustrating a longitudinal, roller-carrying member of the preferred embodiment; and

FIGURE 8 is a schematic perspective view illustrating the securement of the roller-carrying member to a supporting member.

The conveyor assembly which is the preferred embodiment of this invention is specifically of the kind specified, enabling articles to be moved a short distance from a loading station X to a collection station Y, the articles moving down the conveyor system under the action of gravity.

The assembly which is the preferred embodiment of this invention comprises a supporting structure comprising four vertically extending struts 6 connected together by beams 8 and cross members 10, the struts 6 each being provided, in side faces 7 thereof, with spaced apertures 12.

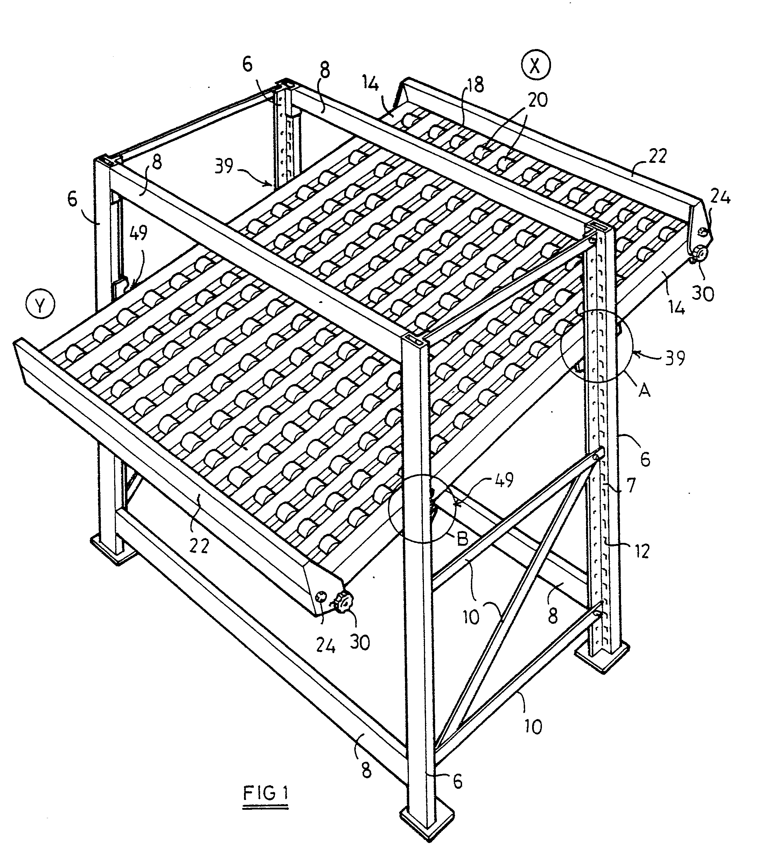

The assembly also comprises a roller assembly (13) comprising spaced side members 14, and spaced end members 16, to afford a generally rectangular frame. Extending between the side members, generally parallel to the end members, are a plurality of transverse intermediate members 17, and extending between the end members 16, and supported on the intermediate transverse members 17, are a plurality of intermediate longitundial members 18, each of which supports a plurality of rollers 20 mounted on a common axis (see Figure 7), the rows of rollers extending generally parallel (see Figure 1).

The longitudinal members 18 are secured to the end members 16 by the provision of plunged holes 18a at the ends of the longitundinal members, which are received within mating slots 16a provided in the end members (see Figure 6). In addition, the longitudinal members 18 are secured to the intermediate transverse members 17 by shelf-locating spring clips 19 which are fixed at intermediate positions along the length of the members 18, and which locate with the intermediate transverse members to provide local clamping (see Figure 8).

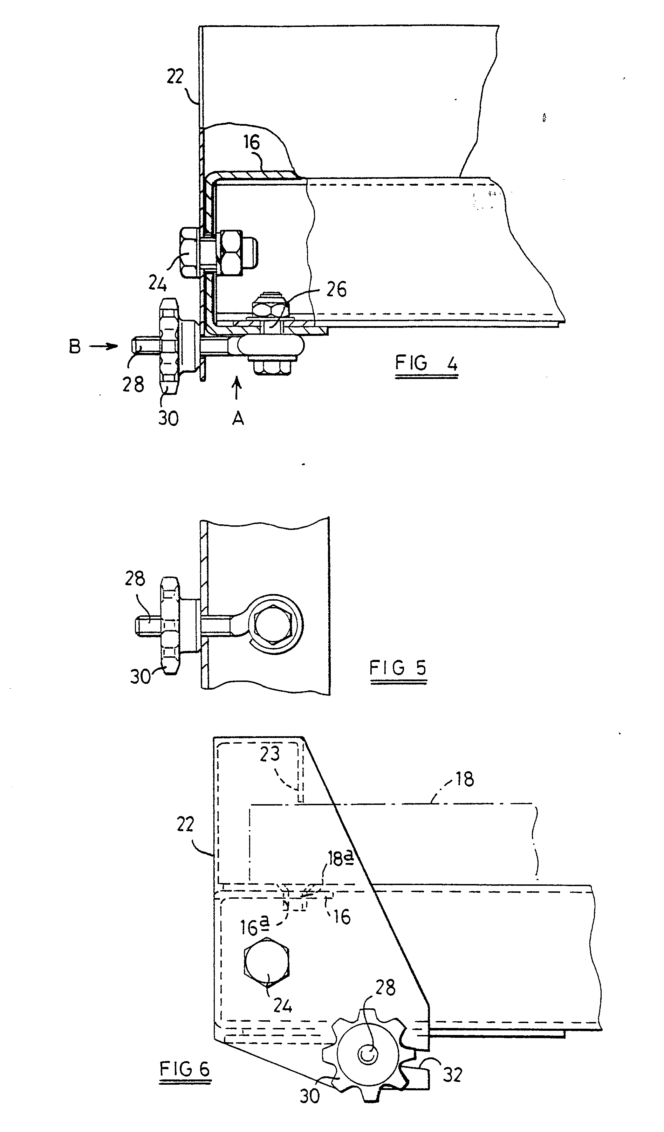

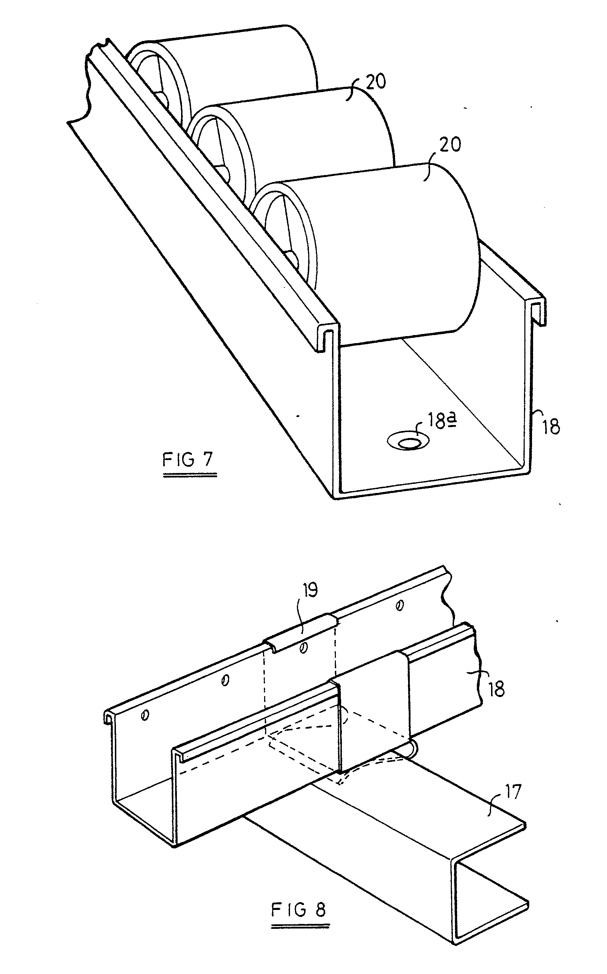

Pivotally mounted on each end members 16, by the use of coaxial pivot mountings 24, is a clamping member 22. Pivotally mounted on a pivot mounting 26, one of which is provided on each side of said end, the axis of the pivot mounting 26 extending at right angles to the axis of the pivot mounting 24, is a bolt 28, on which a hand nut 30 is screwed. When in an operative position, shown in Figures 4 and 5, the bolt 28 is located in a slot 32 provided in an underside of the clamping member 22, the hand nut being tightend to secure the clamping member in the position shown.

By loosening the hand nut 30, the bolt may be swung out of the slot 32 (to the right as seen in Figure 6) allowing the clamping member 22 to be pivoted about the axis of the pivot mounting 24, in an anti-clockwise direction (Figure 6) to move a leading, clamping portion 23 thereof away from the bed of the roller assembly.

With the clamping members 22 at each end of the roller assembly in their inoperative positions, the longitudinal members 18, and the rollers 20 supported thereby, may be moved widthwise of the bed, over the end members 16 upon which they rest (Figure 6). When the longitudinal members have been adjusted to desired widthwise spacings, the clamping members 22 may be returned to their operative positions and the clamping portions 23 thereof engaging the longitudinal members 28, to press the longitudinal members 18 against the end members 16, to hold the roller assembly securely in position relative to the bed, the clamping members each being retained in their operative positions by pivotal movement of the two hand nuts about the axes of their pivotal mountings 26, with the bolts 28 entering the slots 32, and the hand nuts being tightened into engagement with the side walls of the clamping member.

Alternatively if desired the longitudinal members 18 may be secured to the end member 16 by clips 19, of the kind utilised to secure the members 18 to the intermediate 17.

The conveyor system which is the preferred embodiment of this invention comprises pivot mounting means 39 comprising two mounting plates 40, each comprising three spaced tongues 41 adapted to be engaged with three of the apertures 12 of a strut 6, at a desired height-wise position of the supporting structure.

Extending from the mounting plate 40 is a pivot pin 42.

Secured to the underside of each side member 14, at the rear end portion thereof, is a pivot plate 46 in which is provided a L-shaped slot 48, which may be located over the pivot pin 42.

At the forward end of the roller assembly, retaining means 49 of the conveyor system comprises a support plate 50, similarly provided with three spaced tongues 52 adapted to be engaged in three of the apertures 12 of one of the leading struts 6, enabling the supporting plate 50 to be mounted on the strut at a desired height-wise position. Extending into a forwardly-facing, inclined side edge 54 of the support plate 50 are three L-shaped slots 56a, 56b, 56c, of progressively longer length.

Mounted on each of the side members 16, at postions close to those occupied by the support plates 50, are coaxial pivot pins 60.

With the pivot plate 46 on each side of the roller assembly resting on an associated pivot pin 42, pivotal movement of the roller assembly about the axis of the pivot pin 42 is permitted, whilst permitting limited longitudinal movement of the roller assembly during relative movement of the pivot pin 42 length-wise of the slot 48. Thus by a combination of longitudinal movement of the roller assembly, and pivotal movement about the axis of the pivot pins 42, the pivot pins 60 may be engaged within or disengaged from a selected pair of slots 56a, or 56b, or 56c, to support the roller assembly at a desired inclination to the horizontal.

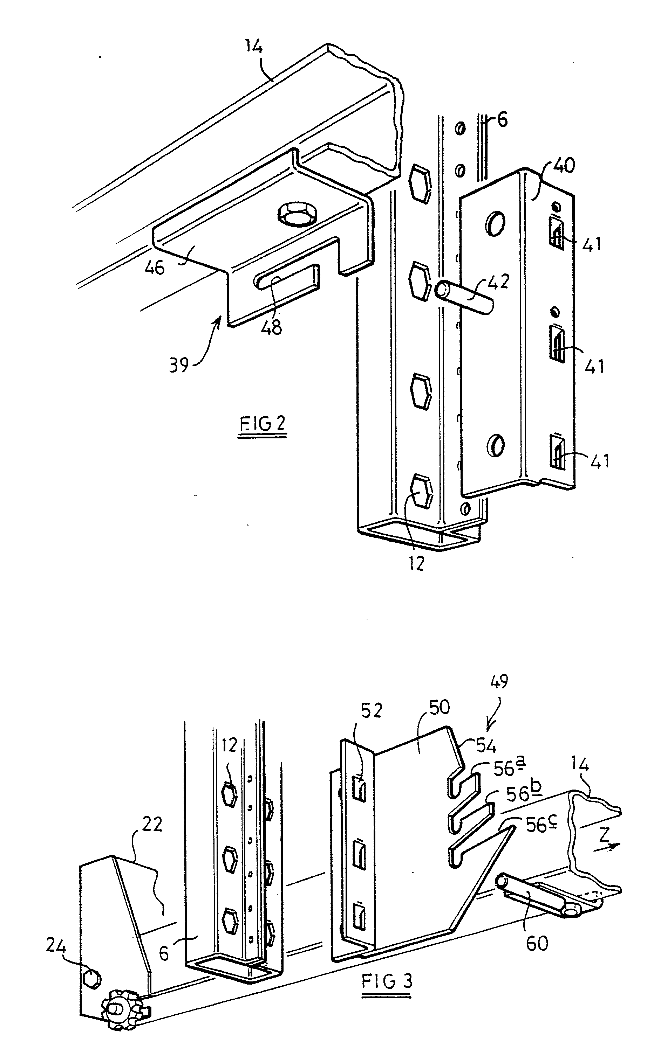

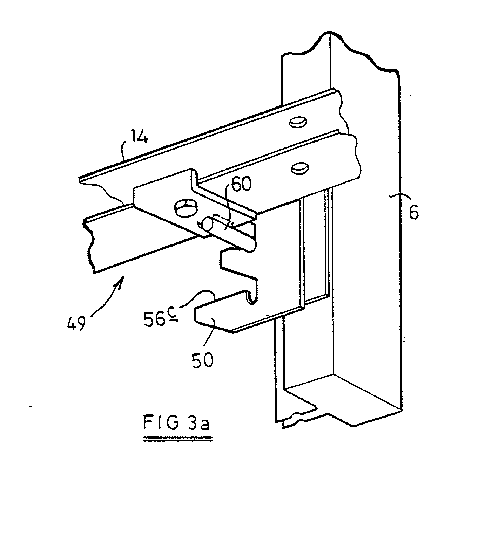

For safety purposes, the maximum longitudinal movement permitted by the length of the slot 48 (in the direction Z, Figure 3) is such that the pin 60 is not permitted to move beyond the outer edge of the lower slot 56c.

In this manner the roller assembly cannot inadvertently be dropped at its front edge, during an adjustment of its height-wise position.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A conveyor assembly comprising:
   (a) a supporting structure (4);
   (b) a roller assembly (13);

(c) pivotal mounting means (39) by which the roller assembly (13) may be mounted on the supporting structure (4) for pivotal movement about an axis at right angles to the direction of flow over the roller assembly; and

(d) retaining means (49) cooperative between the roller assembly (13) and the supporting structure (4) to retain the roller assembly in a desired inclination to the horizontal.

2. A conveyor assembly according to Claim 1 wherein the roller assembly (13) comprises a frame comprising end members (16) and a plurality of longitudinal members (14, 18) extending between the end members, individual rollers (20) of the assembly being carried by the longitudinal members (14, 18).

3. A conveyor assembly according to Claim 2 wherein the longitudinal members comprise outer members (14) fixedly secured to and extending between the end members (16), with intermediate longitudinal members (18) being received at one, rear end in a channel in one of the end members (16) and being clamped to the other, forward end by the other end member (16).

4. A conveyor system according to Claim 2 wherein the intermediate liongitudinal members (18) are clamped at both the rear end member(16) and the forward end member (16) by identical clamping devices (22).

5. A conveyor assembly according to any one of Claims 2, 3 and 4 wherein the longitudinal members (18) are secured to some at least of the transverse members (16, 17) by spring clips (19).

6. A conveyor assembly according to any one of the preceding claims wherein the construction and arrangement is such that limited linear movement of the roller assembly (13), generally in the plane thereof, is permitted, preferably in a manner in which the weight of the roller assembly retains the pivotal mounting means (39) in engagement.

7. A conveyor assembly according to Claim 6 wherein the roller assembly (13) comprises an elongate slot (48) on each side which rest on pivot pins (42) carried by the supporting structure.

8. A conveyor assembly according to Claim 7 wherein the retaining means (49) comprises support members (50) mounted on the supporting structure with which the roller assembly (13) may be engaged.

9. A conveyor assembly according to Claim 7 wherein the support members (50) are such as to provide support for the roller assembly (13) at a plurality of height-wise positions, whereby a desired inclination of the roller assembly (13) may be selected.

10. A conveyor assembly according to one of Claims 8 and 9 wherein the construction and arrangement is such that the roller assembly (13) may be disengaged from the support members (50) by linear movement thereof generally in the plane of the roller assembly.

11. A conveyor assembly according to any one of the preceding claims wherein the supporting structure (4) is of the kind comprising vertical members (6) provided at spaced vertical intervals with first cooperating means (12), and the pivot means (39) and/or the retaining means (49) is provided with second cooperating means (41, 52) engagable with the first cooperating means (12) to enable the retaining means and the pivot means (as the case may be) to be readily positionably secured to the supporting structure at desired height-wise position.

FIG 1

FIG 2

FIG 3

FIG 3a

FIG 4

FIG 5

FIG 6

FIG 7

FIG 8

European Patent
Office

**EUROPEAN SEARCH REPORT**

Application number

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 89304965.0 |
| A | <u>DE - U1 - 8 712 567</u><br>(JÜRGENS)<br>* Fig. 1; page 1, lines 4-6 *<br>-- | 1-3,12 | B 65 G 13/12<br>B 65 G 13/00 |
| A. | <u>EP - A1 - 0 037 277</u><br>(INTERLAKE)<br>* Fig. 3 *<br>-- | 1-3,12 | |
| A | <u>WO - A1 - 87/02 016</u><br>(ELTEN NEDERLAND)<br>* Fig. 8a *<br>---- | 1 | |
| | | | **TECHNICAL FIELDS SEARCHED (Int. Cl.4)**<br><br>B 65 G |

The present search report has been drawn up for all claims

| Place of search | Date of completion of the search | Examiner |
|---|---|---|
| VIENNA | 29-08-1989 | BAUMGARTNER |